# EUROPEAN PATENT SPECIFICATION

(11) **EP 0 333 322 B1**
(45) Date of publication and mention of the grant of the patent: **24.04.1996**
(21) Application number: 89301412.6
(22) Date of filing: 15.02.1989
(51) Int. Cl.: H03M 13/00, H03M 5/14, H04L 25/497, H03M 13/12

(54) **Input coding for partial response channels**
Eingangskodierung für Partial-Response-Kanäle
Codage d'entrée pour des canaux à réponse partielle

(30) Priority: 18.03.1988 US 169919
(43) Date of publication of application: 20.09.1989
(73) Proprietor: International Business Machines Corporation, Armonk, N.Y. 10504 (US)
(72) Inventor: Karabed, Razmik, San Jose California 95120 (US); Siegel, Paul Howard, San Jose California 95120 (US)
(74) Representative: Burt, Roger James, Dr.

(56) References cited:
- GB-A- 2 061 674
- IEEE TRANSACTIONS ON INFORMATION THEORY. vol. 32, no. 6, November 1986, NEW YORK US pages 797 - 815; CALDERBANK ET AL: 'Binary convolutional codes with application to magnetic recording'
- IEEE GLOBAL TELECOMMUNICATIONS CONFERENCE, ATLANTA, US vol. 2, 28 November 1984, NEW-YORK, US pages 735 - 739; MORALES MORENO ET AL: 'OPTIMAL CONCARENATION OF TRELLIS CODES AND GENERALIZED MSK SIGNALS'
- IEEE TRANSACTIONS ON MAGNETICS. vol. 23, no. 5, September 1987, NEW YORK US pages 3666 - 3668; THAPAR & PATEL: 'A CLASS OF PARTIAL RESPONSE SYSTEMS FOR INCREASING STORAGE DENSITY IN MAGNETIC RECORDING'

## Description

This invention relates to input coding for partial response channels by which techniques binary digital data can be transmitted over partial response channels using maximum likelihood (PRML) sequence detection with what are thought to be significantly improved coding gains.

The following prior art references are considered by applicants to be the most pertinent to the present invention:
[A] J.K. Wolf and G. Ungerboeck, "Trellis Coding for Partial-Response Channels," IEEE Trans. Comm., Vol. COM34, No. 8, August 1986, pp. 765-773.
[B] T.A. Lee and C. Heegard, "An Inversion Technique for the Design of Binary Convolutional Codes for the 1 - D^{N} Channel," Proc. IEEE Regional Meeting, Johns Hopkins, February 1985.
[C] A.R. Calderbank, C. Heegard and T.A. Lee, "Binary Convolutional Codes with Application to Magnetic Recording," IEEE Trans. Info. Th., Vol. IT32, No. 6, November 1986, pp. 797-815.
[D] H. Thapar and A. Patel, "A Class of Partial Response Systems for Increasing Storage Density in Magnetic Recording," presented at Intermag 1987, Tokyo, Japan.

Partial response signalling with maximum likelihood sequence detection in digital data communication and recording applications is a known technique. References [A], [B], [C] supra, describe trellis coding techniques to provide coding gain required in noisy or otherwise degraded channels. These techniques apply to channels described by channel transfer polynomials of the form (1 ± D^{N}), for N ≥ 1, and which are precisely those obtained by interleaving N times a channel with transfer polynomial (1 ± D).

References [A], [B] and [C] use a binary convolutional code with specified rate and Hamming distance properties as the trellis code. The coding gain of these trellis codes is determined by the free Euclidean distance of the channel outputs which is lower bounded by (the lowest even number greater than or equal to) the free Hamming distance of the convolutional code. The number of consecutive zeros in the output signal must be limited for purposes of timing and gain control. In order to control the maximum run of zero samples in the channel output signal, or "zero run-length" (ZRL), the encoded data is modified by adding (modulo 2) a fixed binary sequence, called a "coset vector", to the encoder output.

In addition, Reference [A]'s approach requires an inverse channel precoder to make non-zero output samples correspond to ones in the channel input, and conversely. However, the approaches in References [B] and [C] do not require a precoder; instead they invert the original code (termed the "magnitude code") and convert it into convolutional code (termed the "sign code"), which is then used as the actual trellis code. References [A], [B] and [C] each specify the underlying convolutional code to be one with maximum Hamming distance d^{H}.

The conventional biphase code described in Reference [C] shows that the approaches of References [A], [B] and [C] do not always produce, for a given code rate and coding gain, the code with minimum detector complexity and/or minimum zero sample run-length constraint.

The techniques heretofore disclosed (eg in References [A], [B] and [C]) do not produce any codes for the extended class of suitable partial response channels described in Reference [D], which describes a class of channels with transfer polynomials of the form (1 - D) (1 + D)^{N}, where N≥2. There is no need for techniques which can provide codes which improve upon those found in the prior art by enabling significantly enhanced coding gains.

Toward this end, the invention provides a method for coding input bit strings to improve reliability of partial response channels handling the same, comprising encoding an input string into an intermediate string using a binary convolution code; characterised in that the method comprises encoding the intermediate string using a non-linear inner code that repeats and inverts selected bits of the intermediate string; the inner code having a coding rate of less than one.

Embodiments of the invention for coding input strings to improve reliability of partial response channels are disclosed hereinafter. They involve encoding an input string into an intermediate string using a binary convolutional code, and encoding the intermediate string using a non-linear inner code that repeats and inverts selected bits of the intermediate string. The inner code has a coding rate of less than one.

In one embodiment, the inner code and the channels are interleaved and the channel transfer polynomial is (1-D^{N}), with N preferably 2, and an inner code rate of at least one-half and less than one.

In another embodiment, involving so-called "extended" class 4 partial response channels, the inner code is interleaved, the channel transfer polynomial is (1+D-D-D³), and the inner code rate is preferably one-half.

The present invention will be described further by way of example with reference to such embodiments thereof as illustrated in the accompanying drawings, in which:
Fig. 1 is a block diagram depicting a trellis coding technique; and
Fig. 2 is a trellis diagram for an interleaved biphase code used with "extended" class 4 partial response channels.

### General

Improved trellis coding techniques are described for reliable data transmission over noisy partial response channels with:
(a) Transfer polynomials (1 ± D^{N}), which are interleaved dicode and interleaved class 1 channels, and also
(b) Transfer polynomial (1 - D)(1 + D), called "extended" class 4 partial response (EPR4).

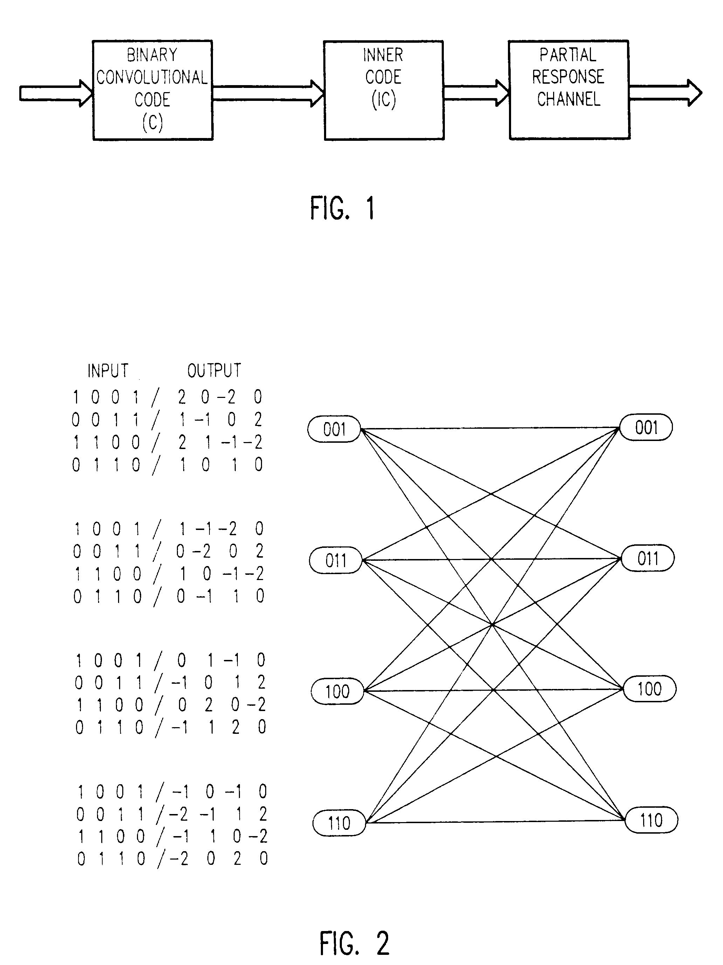

These techniques are depicted in Fig. 1, wherein a binary convolutional code C is used in conjunction with an inner code, IC.

In the Appendix hereto, there is shown the derivation of Equations (A2) and (A13) which specify the precise relationship between the Euclidean distance of two channel output sequences and the Hamming distance of their corresponding binary channel inputs, with specific attention to the interleaved (1 - D) channels and the (1 - D)(1 + D) channel. These Equations (A2) and (A13) validate the concatenated coding technique described by Fig. 1. This technique can make use of inner codes of any rate; however, the trellis codes which provide rates and coding gains of present interest are achieved with inner codes with rates greater than or equal to 1/2. Specifically, four inner codes, denoted IC1, IC2, IC3 and IC4 are described with rates 1/2, 2/3, 3/4 and 5/8, respectively. The codes for use with (1 - D) are systematic block codes: $\text{IC1: x₁ → x₁} \overline{\text{x}} \text{₁}$$\text{IC2: x₁x₂ → x₁x₂} \overline{\text{x}} \text{₂}$$\text{IC3: x₁x₂x₃ → x₁x₂} \overline{\text{x}} \text{₂x₃}$$\text{IC4: x₁x₂x₃x₄x₅ → x₁x₂} \overline{\text{x}} \text{₂x₃x₄} \overline{\text{x}} \text{₄x₅} \overline{\text{x}} \text{₅}$

These codes can be interleaved N times for use on the interleaved dicode channel with transfer polynomial (1 - D^{N}). Alternatively, they may be interleaved twice for use on channels with polynomial (1 - D)(1 + D)^{N}.

The bounds on the free Euclidean distance, d$\frac{\text{2}}{\text{free}}$, as a function of the free Hamming distance, d$\frac{\text{H}}{\text{free}}$ , of the code C for IC1 and IC2 are as follows, proofs being given in the Appendix:${\text{IC1: d}}_{\text{free}}^{\text{2}} {\text{≥ 4d}}_{\text{free}}^{\text{H}} \text{+ 2}$${\text{IC2: d}}_{\text{free}}^{\text{2}} {\text{≥ 2d}}_{\text{free}}^{\text{H}}$

The bounds in Equations (1) and (2) apply to the interleaved trellis codes as used on the interleaved channel.

For a convolutional code C with free Hamming distance, d$\frac{\text{H}}{\text{free}}$ , the free Euclidean distance of the interleaved IC1 concatenated scheme, d$\frac{\text{2}}{\text{free}}$ when applied to the (1 - D)(1 + D) channel, satisfies${\text{d}}_{\text{free}}^{\text{2}} {\text{≥ min{8d}}_{\text{free}}^{\text{H}} {\text{+ 4, 4d}}_{\text{free}}^{\text{H}} \text{+ 8}}$

While it is not possible to formulate useful bounds for IC3 and IC4, these inner codes are included because they also produced concatenated codes of potential interest.

### Applications of IC1, IC2, IC3 and IC4

For each of these inner codes, the technique for obtaining concatenated code rates equal to one-half will now be explained.

By concatenating an IC1 on a (1 - D) channel with the optimal rate 1 code, a combined code rate of 1/2 is achieved. This is a block code with a large free Euclidean distance d$\frac{\text{2}}{\text{free}}$ = 6 and maximum zero run length (ZRL) of 1, as noted in Reference [C].

By concatenating an IC2 of rate 2/3 on a (1 - D) channel with rate 3/4 binary convolutional codes, a family of combined codes is obtained with rate 3/6 and maximum ZRL of 2.

By concatenating an IC3 of rate 3/4 on a (1 - D) channel with rate 2/3 binary convolutional codes, a family of combined codes with rate 2/4 and maximum ZRL of 3 is obtained.

By concatenating an IC4 of rate 5/8 on a (1 - D) channel with rate 4/5 binary convolutional codes, a family of combined codes with rate 4/8 and maximum ZRL of 3 is obtained.

By concatenating an interleaved IC1 code of rate 1/2 used on a (1 - D)(1 + D) channel with the optimal rate 1 code, a rate 2/4 code is obtained, which is an "interleaved biphase" code that provides large free Euclidean distance d$\frac{\text{2}}{\text{free}}$ = 12, corresponding to a coding gain of 4.8 dB. The maximum zero sample run length in the output is 1.

Table 1 specifies codes derived for inner codes IC1 and IC2 using the techniques just described. The 2-state code is the only rate 1/2 code; it is the "biphase code" obtained from IC1. All the others are rate 3/6 codes obtained using IC2. The underlying rate 3/4 binary convolutional codes for the IC2 codes are defined by means of a generator matrix G(D). The polynomial entries in the matrix are presented in octal notation with low degree terms at the left, e.g. 62 = 110 010 represents i + D + D⁴. These convolutional codes per se are optimal with respect to Hamming distance.

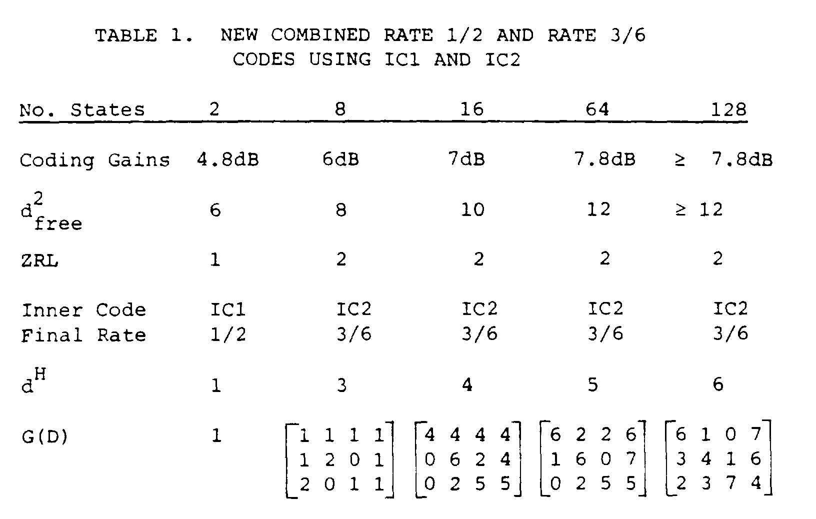

Uses a variant to IC2, x₁x₂ → x₁$\overline{\text{x}}$₁x₂

In connection with Table 1, the actual free distance was found by path-to-path distance calculation using the Viterbi algorithm on a trellis with the square of the number of states of the decoder, whenever this was computationally feasible (no more than 16 decoder states). In other cases, a lower bound based on subset distances was computed using a trellis with the same number of states as the decoder.

Tables 2 and 3 give some of the codes found using the inner codes IC3 and IC4. These rate 2/4 and rate 4/8 trellis codes may be preferable to rate 3/6 codes in byte-oriented data processing systems.

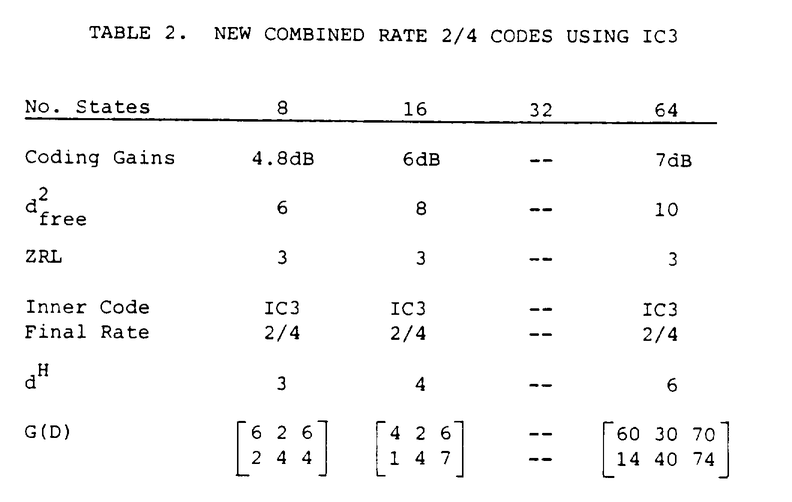

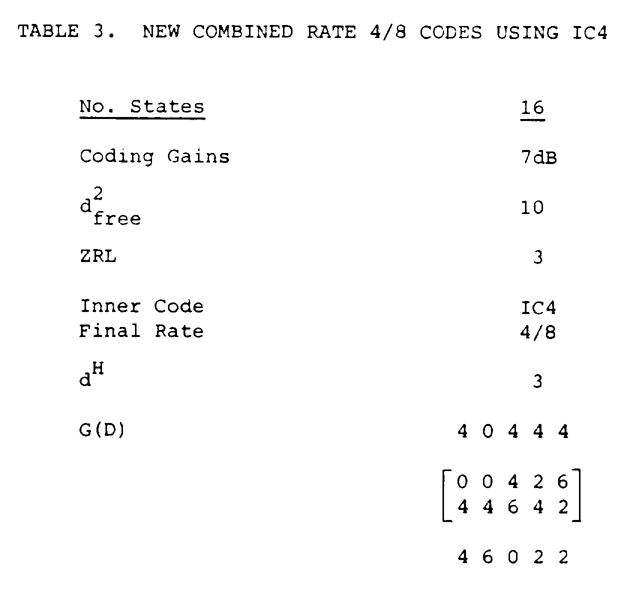

### Selected Concatenated Convolutional Codes and Inner Codes with Combined Rate Less than 1/2

In this section, inner code IC1 is used to construct trellis codes for (1 - D), for selected combined rates less than 1/2. Note that several of the codes exhibit very large coding gains at moderate complexity for rates between 1/3 and 1/2.

Example 1: If IC1 is concatenated with a rate 4/5 convolutional code, with constraint length υ=3, and free Hamming distance d$\frac{\text{H}}{\text{free}}$ =3, a rate 4/10 code is obtained, with a 16-state decoder, ZRL 1, and free Euclidean distance d$\frac{\text{2}}{\text{free}}$ ≥14. This corresponds to an 8.5 dB coding gain over the uncoded channel, un-normalised for rate.

Example 2: If IC1 is concatenated with rate 3/4 codes, a family of rate 3/8 codes is obtained, as described in Table 4. Note that the values of d$\frac{\text{2}}{\text{free}}$ shown are lower bounds, and that coding gains ranging from 7 dB to 11.1 dB are achieved.

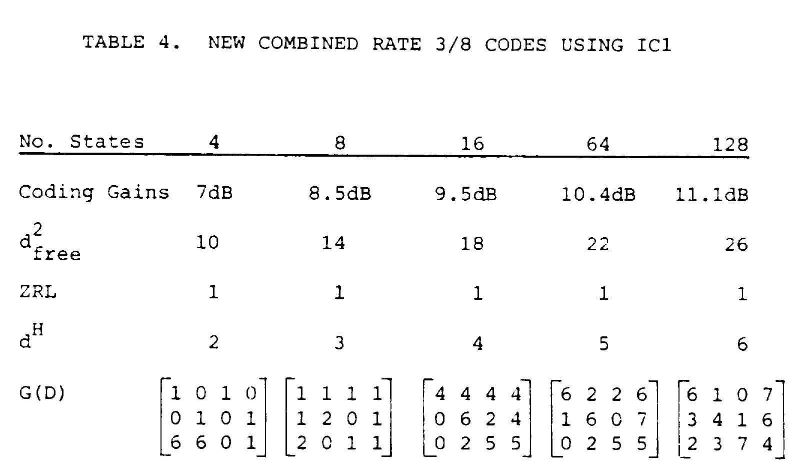

Example 3: If IC1 is concatenated with rate 2/3 codes, a family of rate 2/6 codes is obtained, as described in Table 5. The values of d$\frac{\text{2}}{\text{free}}$ shown are lower bounds. At this lower rate, coding gains ranging from 10.4 dB to 12.3 dB are achieved with the number of decoder states ranging from 32 to 256.

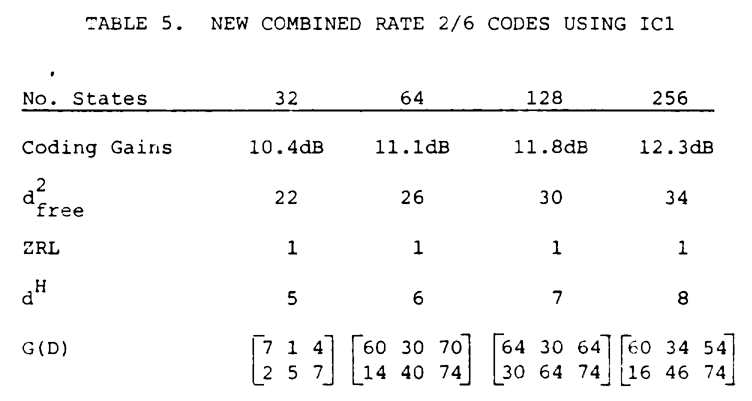

Channels with transfer polynomial (1 - D^{N}) have been discussed in connection with interleaved channels. However, it will be understood by those skilled in the art that the resulting codes can be modified for use on a (1 + D^{N}) channel, by converting a code for the (1 - D) channel to a code with the same coding gain for a (1 + D) channel by adding the vector 01010101... or 10101010... .

### Viterbi Decoder Implementations for Combined Rate 1/2 Codes for Interleaved Channels

This section addresses the issue of Viterbi decoder implementation and compares the required hardware complexity of the new codes to that of previously proposed codes with comparable coding gain. The computational and storage requirements are estimated for decoding a rate k/n code based upon a trellis structure with s states.

Assume a parallel architecture for the Viterbi decoder similar to that commonly used. The decoder comprises two sections. The first section generates the survivor sequences and consists of a subunit that computes branch metrics, along with Add-Compare-Select (ACS) subprocessors replicated and interconnected to reflect the trellis structure.

The branch metric calculation, with appropriate use of ROM, requires approximately n additions per edge in the trellis. The ACS subprocessor performs 2^{k} two-way additions to generate the extended path metrics, a 2^{k}-way comparison to determine the minimum metric, and a 2^{k}-way multiplexing operation to select the corresponding sequence and updated metric. The ACS block is replicated s times, once for each state.

Assuming that an adder has complexity α, a 2^{k}-way comparator has complexity β2^{k} and that a 2^{k} - to - 1 multiplexer has complexity γ2^{k}, then an approximate measure of the complexity of the first section, normalised to a "per decoded bit" basis, is${\text{V}}_{\text{1}} {\text{= (αn + β + γ)s2}}^{\text{k}}$

The second section is the trellis paths history, which stores survivor sequences for each trellis state to a depth adequate to ensure a high probability of path merging. It stores the survivor sequences in a set of s shift registers, each of length approximately five times the constraint length of the code, to ensure path merging. The registers are interconnected by a series of 2^{k}-way multiplexers inserted after every n shift register stages. These enable the correct updating of survivor sequences. If the complexity of a single shift register stage (usually a flip-flop) is δ, the required hardware complexity is approximately given by the quantity${\text{V}}_{\text{2}} {\text{= (δn + γ2}}^{\text{k}} {\text{)slog}}_{\text{2}} \text{s}$

When these complexity measures are computed for the rate 1/2 codes in the Prior Art and applicants' new rate 1/2 and rate 3/6 codes in Table 1, the results favour the new codes by substantial margins, as shown in Table 6.

**TABLE 6.**

| COMPARISON OF DECODER COMPLEXITY (UNBLOCKED) | | | |
|---|---|---|---|
| Coding Gains | 4.8dB | 6dB | 7dB |
| d$\frac{\text{2}}{\text{free}}$ | 6 | 8 | 10 |
| States (Prior Art) | 8 | 32 | 64 |
| (Table 1) | 2 | 8 | 16 |
| ZRL (Prior Art) | 6 | 10 | 14 |
| (Table 1) | 1 | 2 | 2 |
| V₁ (Prior Art) | (2α+β+γ)16 | (2α+β+γ)64 | (2α+β+γ)128 |
| (Table 1) | (2α+β+γ)4 | (6α+β+γ)64/3 | (2α+β+γ)128/3 |
| V₂ (Prior Art) | (2δ+2γ)24 | (2δ+2γ)160 | (2δ+2γ)384 |
| (Table 1) | (2δ+2γ)2 | (6δ+8γ)24 | (6δ+8γ)64 |

- Prior Art =: References [A], [B] or [C];
- Table 1 =: IC1 and IC2 Codes
- V₁ =: Metric Complexity
- V₂ =: Path History Complexity

While the complexity measures for the rate 2/4 code with 16-state decoder and coding gain of 6 dB shown in Table 2 has not been here calculated, it compares favourably with the complexity measures for the corresponding rate 1/2 code.

If these prior art rate 1/2 codes are blocked for use as rate 2/4, 3/6 or 4/8 codes to achieve possible speed advantages of block processing in Viterbi decoding, applicants' codes provide further significant reductions in the hardware requirements, as illustrated in Table 7 for the rate 1/2 and rate 3/6 codes.

**TABLE 7.**

| COMPARISON OF DECODER COMPLEXITY (BLOCKED 3/6) | | | |
|---|---|---|---|
| Coding Gains | 4.8dB | 6dB | 7dB |
| d$\frac{\text{2}}{\text{free}}$ | 6 | 8 | 10 |
| States (Prior Art) | 8 | 32 | 64 |
| (Table 1) | 2 | 8 | 16 |
| ZRL (Prior Art) | 6 | 10 | 14 |
| (Table 1) | 1 | 2 | 2 |
| V₁ (Prior Art) | (6α+β+γ)64/3 | (6α+β+γ)256/3 | (6α+β+γ)512/3 |
| (Table 1) | (6α+β+γ)16/3 | (6α+β+γ)64/3 | (6α+β+γ)128/3 |
| V₂ (Prior Art) | (6δ+8γ)24 | (6δ+8γ)160 | (6δ+8γ)384 |
| (Table 1) | (6δ+8γ)2 | (6δ+8γ)24 | (6δ+8γ)64 |

### Viterbi Decoder Implementations for Interleaved Biphase Code on the EPR4 Channel

In this section, a difference metric Viterbi decoding algorithm is derived for interleaved biphase (IB) code on the EPR4 channel with transfer polynomial (1 - D)(1 + D). Bounds are given on the size of the difference metrics at step n. These bounds lead to a decoder implementation that does not require re-normalisation.

Fig. 2 depicts the four-state trellis upon which the Viterbi decoding algorithm operates. The state names represent the contents of the channel memory (3 bits) and the edge labels are${\text{x}}_{\text{1}} {\text{x}}_{\text{2}} {\overline{\text{x}}}_{\text{1}} {\overline{\text{x}}}_{\text{2}} {\text{/c}}_{\text{1}} {\text{c}}_{\text{2}} {\text{c}}_{\text{3}} {\text{c}}_{\text{4}}$ where x₁x₂$\overline{\text{x}}$₁$\overline{\text{x}}$₂ is the IB codeword and c₁c₂c₃c₄ is the corresponding chanel output sequence. Note that the channel input equals the code output.

To determine the optimal path extensions, it suffices to keep track of three difference survivor metrics, DJₙ (2,1), DJₙ (3,1) and DJₙ(4,1). These path extensions, as well as the corresponding difference metric conditions which govern their selection are shown in Table 8 below. The conditions take the form of inequalities involving the three quantities${\text{a}}_{\text{n}} {\text{= DJ}}_{\text{n1}} {\text{(2,1) + 2y}}_{\text{n}}^{\text{1}} {\text{+ 2y}}_{\text{n}}^{\text{2}}$${\text{b}}_{\text{n}} {\text{- DJ}}_{\text{n-1}} {\text{(3,1) + 4y}}_{\text{n}}^{\text{1}} {\text{- 2y}}_{\text{n}}^{\text{2}} {\text{- 2y}}_{\text{n}}^{\text{3}}$${\text{c}}_{\text{n}} {\text{= DJ}}_{\text{n-1}} {\text{(4,1) + 6y}}_{\text{n}}^{\text{1}} {\text{- 2y}}_{\text{n}}^{\text{3}}$ which depend only on the difference metric values DJₙ₋₁(2,1), DNₙ₋₁(3,1) and DJₙ₋₁(4,1) at step n-1 and the channel output samples y$\frac{\text{1}}{\text{n}}$,y$\frac{\text{2}}{\text{n}}$,y$\frac{\text{3}}{\text{n}}$,y$\frac{\text{4}}{\text{n}}$ at time n.

Table 8 is broken into four subtables, 8a-d, each describing the algorithm for generating the survivor for one of the trellis states at time n.

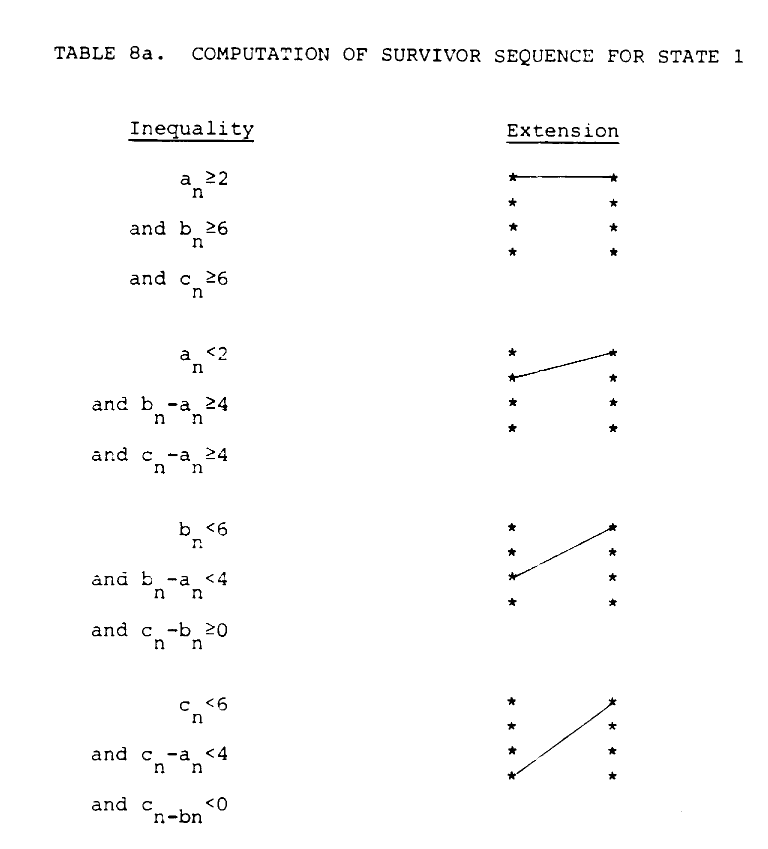

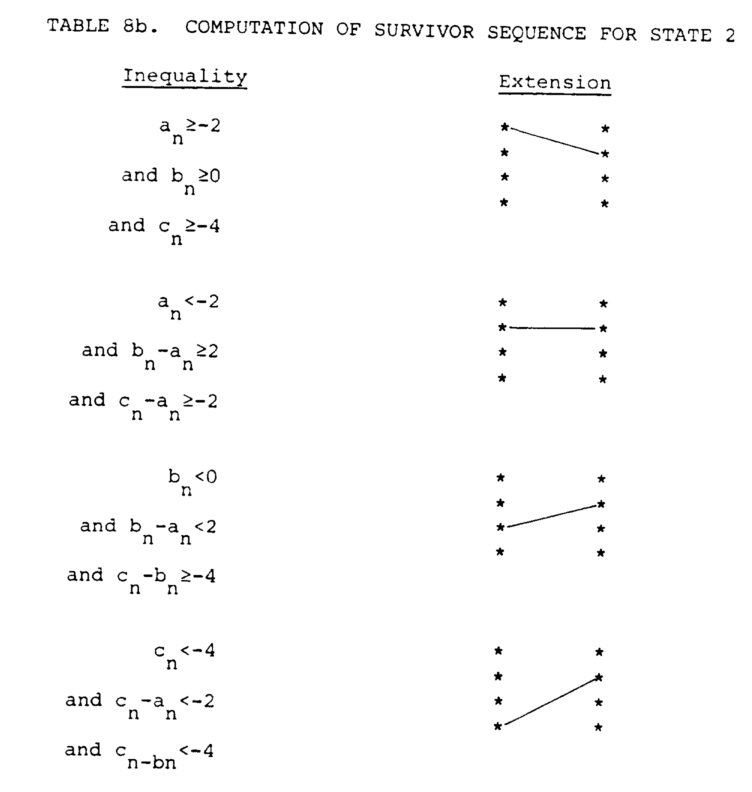

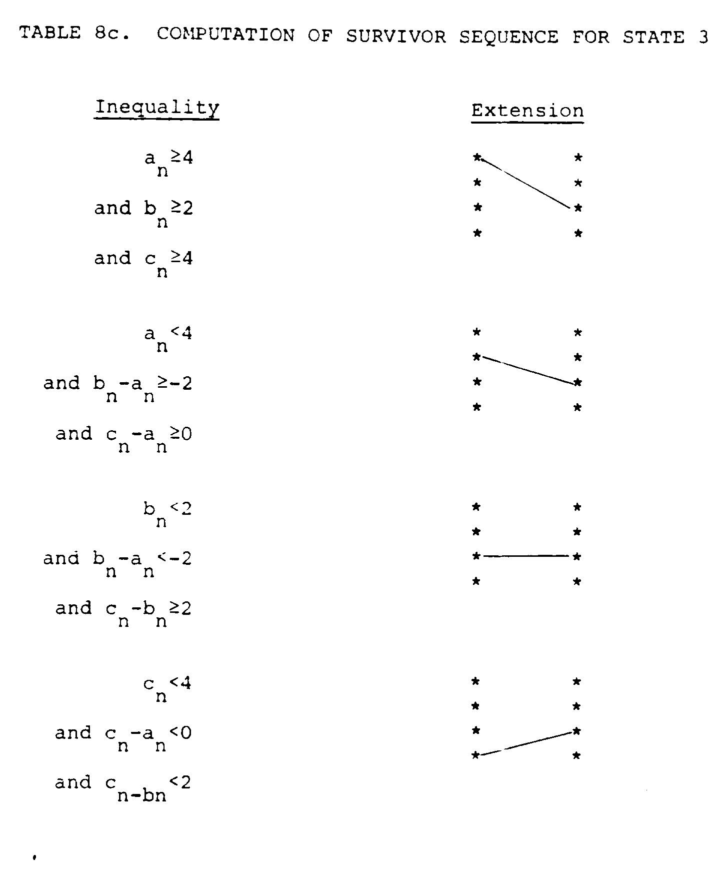

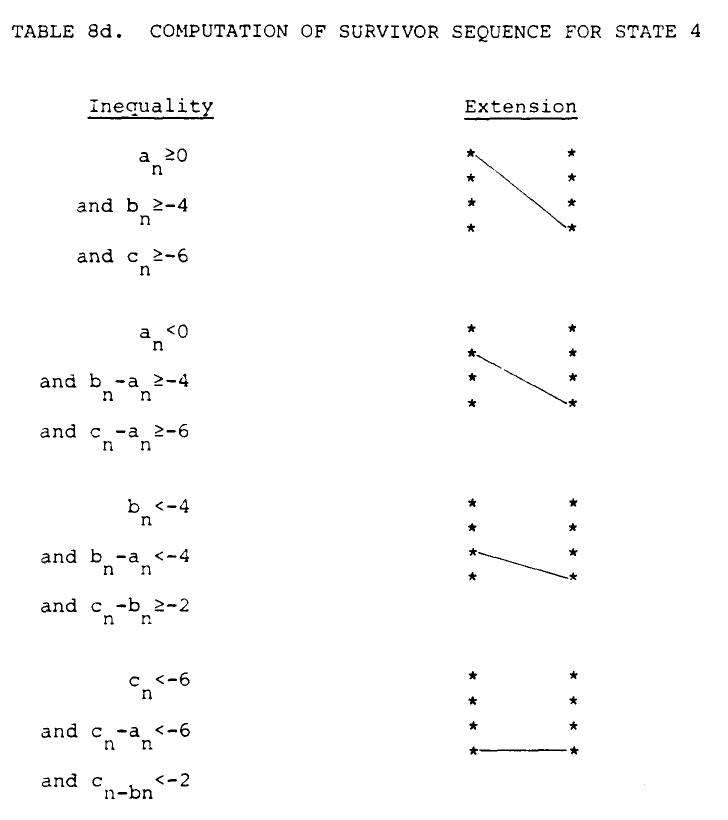

The difference metric updates are easily computed once the path extensions have been made. To compute DJₙ (s,t), the following technique is used. Assume that the time n survivor sequences for s and t are obtained by extending the time n-1 survivor sequences for u and v, respectively. If z₁,z₂,z₃,z₄ are the ideal EPR4 output samples which label the edge from u to s, and w₁,w₂,w₃,w₄ are the ideal EPR4 output samples which label the edge from v to t, then

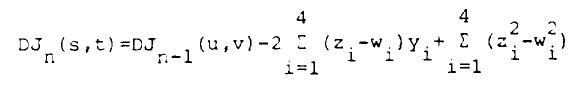

As mentioned above, only the difference metrics DJₙ(2,1), DJₙ(3,1) and DJₙ(4,1) need be updated. Any quantities DJₙ₋₁(u,v) required in the update process can be obtained from a linear combination of DJₙ₋₁(2,1), DJₙ₋₁(3,1) and DJₙ₋₁(4,1).

With the output sample normalisation chosen such that ideal EPR4 sample values are in [-2,2], it can be assumed that the digitised signal samples fall in a range [-A,A]. The following bounds on the quantities DJₙ(2,1) and DJₙ(3,1) can then be computed as${\text{-12A-2≤DJ}}_{\text{n}} \text{(2,1)≤12A+8}$${\text{-8A≤DJ}}_{\text{n}} \text{(3,1)≤8A+6}$${\text{-8A-6≤DJ}}_{\text{n}} \text{(4,1)≤8A+6}$

For example, taking A=4, the bounds show that DJₙ(2,1)ε[-50,56], DJₙ(3,1)ε[-32,38] and DJₙ(4,1)ε[-38,38]. If there are L=2^{r} quantisation levels between ideal sample values, then, at most, 6+r magnitude bits and 1 sign bit are required to store the difference metrics.

It will now be seen that the coding techniques according to the invention provide coding gains of at least 4.8 dB with reduced hardware complexity, representing a significant improvement over prior art techniques. As illustrated, the improved coding gains range from 4.8 dB for two states to 12.3 dB for 256 states. The improved trellis codes provide reliable data transmission over noisy partial response channels with transfer polynomials (1 ± D^{N}) and also with transfer polynomial (1 - D)(1 + D) EPR4 channels.

It will also be seen that the concatenated codes with combined rate 1/2 obtained using the techniques and method embodying the invention for inner codes IC1, IC2, IC3 and IC4 and coding gains ranging from 4.8 dB to 7.8 dB typically require significantly fewer decoder states (by factors of 2 to 4) than the previously known codes. Also, significant reductions in decoder hardware are achieved compared with previously known codes, and the ZRL constraints are substantially improved in all cases.

Moreover, it is to be understood that while only codes with combined rates of at least 1/2 have been disclosed, codes of lesser rate may be achieved by repeating, for example, the IC₁ code to provide a modified code IC$\frac{\text{'}}{\text{1}}$ wherein
x₁x₂ → x₁$\overline{\text{x}}$₂x₂x₁$\overline{\text{x}}$₂x₂ and thereby achieve a combined code rate of 1/3. In similar fashion, IC₃, if similarly modified, would provide a IC$\frac{\text{'}}{\text{3}}$ with a combined rate of 3/8; and IC₄, if similarly modified, would provide a IC$\frac{\text{'}}{\text{4}}$ with a combined rate of 5/16.

Also, the inner code could be repeated more than once.For example, if IC₁ were repeated twice, then a modified
code would be provided wherein x₁ → x₁$\overline{\text{x}}$₁x₁$\overline{\text{x}}$₁x₁$\overline{\text{x}}$₁ and the combined code rate would thus be 1/6.

Finally, it will be seen that in disclosed technique, the combined code rate is the product of the convolutional code rate and inner code rate, that the combined code rate can be changed as desired by modifying either to affect the product, and that by either approach significantly higher coding gains can be obtained than heretofore achieved.

### APPENDIX

### I. General Description of Euclidean Distance Equations for Interleaved Channels

Let x = (xᵢ) and x' = (x$\frac{\text{'}}{\text{i}}$ ) be binary input sequences to the (1 - D) channel, with symbols in {0,1}. Denote the corresponding output sequences by y and y', with${\text{y}}_{\text{i}} {\text{= x}}_{\text{i}} {\text{-x}}_{\text{i-1}}$${\text{y}}_{\text{i}}^{\text{'}} {\text{= x}}_{\text{i}}^{\text{'}} {\text{-x}}_{\text{i-1}}^{\text{'}}$

The squared Euclidean distance between y and y' can be written as:

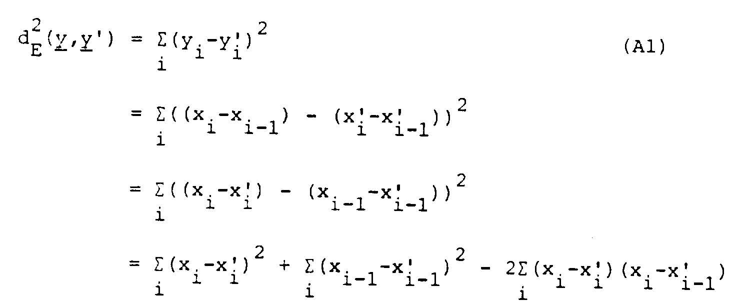

The first two terms in Equation (A1) each contribute 1 to the Euclidean distance for each component in which x and x' differ. Therefore,${\text{Σ(x}}_{\text{i}} {\text{-x}}_{\text{i}}^{\text{'}} {\text{)}}^{\text{2}} {\text{+ Σ(x}}_{\text{i-1}} {\text{-x}}_{\text{i-1}}^{\text{'}} {\text{)}}^{\text{2}} {\text{= 2d}}_{\text{H}} \text{(} {\text{x}}_{̲} \text{,} {\text{x}}_{̲} \text{'),}$ where d_{H} denotes Hamming distance. The last term in Equation (A1) contributes to d$\frac{\text{2}}{\text{E}}$ in the following way:

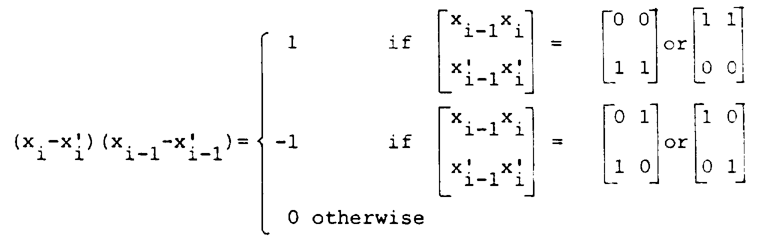

Equation (A1) can therefore be rewritten as:${\text{d}}_{\text{E}}^{\text{2}} \text{(} {\text{y}}_{̲} \text{,} {\text{y}}_{̲} {\text{') = 2d}}_{\text{H}} \text{(} {\text{x}}_{̲} \text{,} {\text{x}}_{̲} {\text{') + 2d}}_{\text{G}} \text{(} {\text{x}}_{̲} \text{,} {\text{x}}_{̲} {\text{') - 2d}}_{\text{B}} \text{(} {\text{x}}_{̲} \text{,} {\text{x}}_{̲} \text{')}$ where 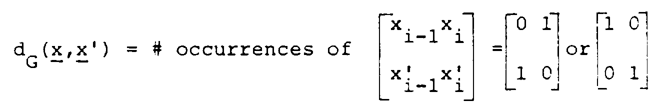 and

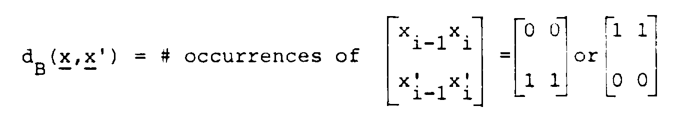

Equation (A2) suggests that an inner code which combines bit repetition and inversion appropriately could generate large Euclidean distance, both by increasing the d_{H} term and by contributing via the d_{G} term.

II. Derivative of Bound on d$\frac{\text{2}}{\text{free}}$ for IC1

First, examine the rate 1/2 inner code denoted IC1, defined by $\text{x → x} \overline{\text{x}}$

This is the conventional biphase modulation code, used here in a new context.

Let x and x' denote inputs to the IC1 encoder, and let u and u' denote the corresponding outputs. Then,${\text{d}}_{\text{H}} \text{(} {\text{u}}_{̲} \text{,} {\text{u}}_{̲} {\text{') = 2d}}_{\text{H}} \text{(} {\text{x}}_{̲} \text{,} {\text{x}}_{̲} \text{')}$ and${\text{d}}_{\text{G}} \text{(} {\text{u}}_{̲} \text{,} {\text{u}}_{̲} {\text{')d}}_{\text{B}} \text{(} {\text{u}}_{̲} \text{,} {\text{u}}_{̲} {\text{')≥1, if d}}_{\text{H}} \text{(} {\text{u}}_{̲} \text{,} {\text{u}}_{̲} \text{')<∞}$ with the inequality arising from the fact that any contribution to d_{B} is bracketed by contributions to d_{G} on either side.

From Equation (A), it follows that if x is generated by a rate k/n convolutional code with free Hamming distance d$\frac{\text{H}}{\text{free}}$, then the inner code IC1 will yield a rate k/2n trellis code with free Euclidean distance d$\frac{\text{2}}{\text{free}}$ bounded by:${\text{d}}_{\text{free}}^{\text{2}} {\text{≥4d}}_{\text{free}}^{\text{H}} \text{+ 2}$ which is the bound given in Equation (1) of the specification.

III. Derivation of Bound on d$\frac{\text{2}}{\text{free}}$ for IC2

To obtain higher rate codes, next consider a rate 2/3 inner code IC2 defined by $\text{x₁x₂ →⁻x₁x₂x₂}$By examining the possible bit patterns for 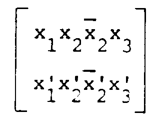 it is noted that within this window, the contributions Δ_{G} to d_{G}(u,u'), Δ_{B} to d_{B}(u,u'), and ΔH to d_{H}(u,u')-d_{H}(x,x') satisfy${\text{Δ}}_{\text{H}} {\text{+ Δ}}_{\text{G}} {\text{- Δ}}_{\text{B}} \text{≥ 0}$ implying that${\text{(d}}_{\text{H}} \text{(} {\text{u}}_{̲} \text{,} {\text{u}}_{̲} {\text{')-d}}_{\text{H}} \text{(} {\text{x}}_{̲} \text{,} {\text{x}}_{̲} {\text{'))+d}}_{\text{G}} \text{(} {\text{u}}_{̲} \text{,} {\text{u}}_{̲} {\text{')-d}}_{\text{B}} \text{(} {\text{u}}_{̲} \text{,} {\text{u}}_{̲} \text{')≥0}$

From Equation (A1) the bound on d$\frac{\text{2}}{\text{free}}$ for IC2 is derived, as stated in Equation (2) of the specification.${\text{d}}_{\text{free}}^{\text{2}} {\text{≥2d}}_{\text{free}}^{\text{H}}$

By examining the minimum distance patterns of the underlying convolutional codes C to determine the presence or absence of patterns for which Equation (A3) is an equality, namely 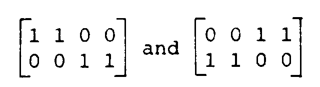 it is possible to explain the discrepancies between the actual d$\frac{\text{2}}{\text{free}}$ and the bound Equation (A4), such as those found in Table 1 for the 16 state and 64 state, rate 3/6 codes. A similar analysis explains the discrepancy in the 8-state, rate 3/6 code derived from the variant of inner code IC2.

### IV. General Derivation of Euclidean Distance Equation for EPR4 Channel

First develop an expression for the squared Euclidean distance between two output sequences of the EPR4 channel, analogous to the derivation for the (1-D) channel above. Let x=(xᵢ) and x'=(x$\frac{\text{'}}{\text{i}}$) be binary input sequences, with symbols in {0,1}, for the EPR4 channel, with channel polynomial (1+D-D-D³). Denote the corresponding output sequences by y and y', with${\text{y}}_{\text{i}} {\text{=x}}_{\text{i}} {\text{+x}}_{\text{i-1}} {\text{-x}}_{\text{i-2}} {\text{-x}}_{\text{i-3}}$${\text{y}}_{\text{i}}^{\text{'}} {\text{=x}}_{\text{i}}^{\text{'}} {\text{+x}}_{\text{i-1}}^{\text{'}} {\text{-x}}_{\text{i-2}}^{\text{'}} {\text{-x}}_{\text{i-3}}^{\text{'}}$

The squared Euclidean distance between y and y' can be written as:

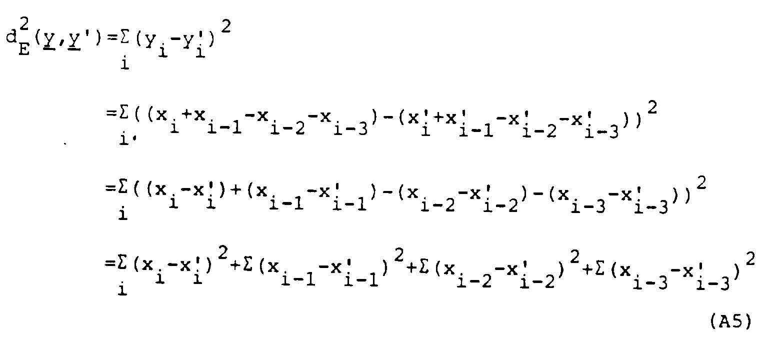

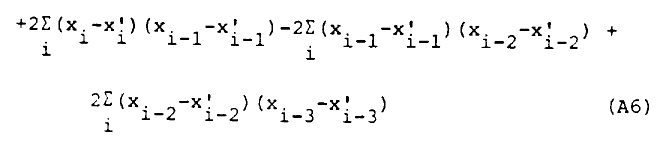

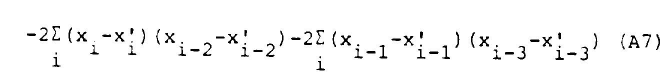

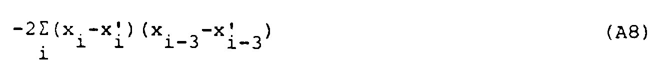

The four terms in Equation (A5) each contribute 1 to the Euclidean distance for each component in which x and x' differ. Therefore, the total contribution from Equation (A5) is${\text{4d}}_{\text{H}} \text{(} {\text{x}}_{̲} \text{,} {\text{x}}_{̲} \text{')}$

The next three terms in Equation (A6) contribute to d$\frac{\text{2}}{\text{E}}$ in the following way:

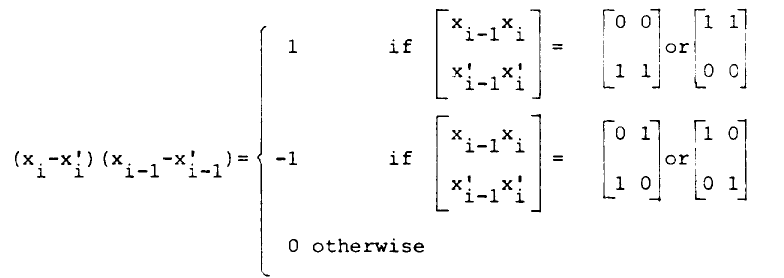

Equation (A6) can therefore be rewritten as$\text{-2(d} {\text{}}_{\text{G}}^{\left(\text{1}\right)} \text{(} {\text{x}}_{̲} \text{,} {\text{x}}_{̲} \text{')-d} {\text{}}_{\text{B}}^{\left(\text{1}\right)} \text{(} {\text{x}}_{̲} \text{,} {\text{x}}_{̲} \text{'))}$ where 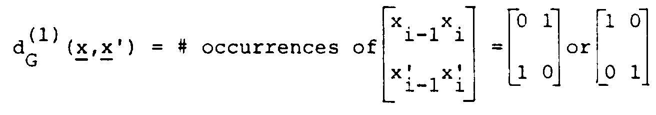 and

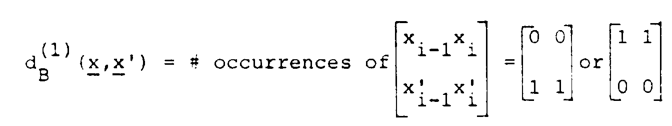

Similarly, the ccntribution from Equation (A3) can be expressed as$\text{4(d} {\text{}}_{\text{G}}^{\left(\text{2}\right)} \text{(} {\text{x}}_{̲} \text{,} {\text{x}}_{̲} \text{')-d} {\text{}}_{\text{B}}^{\left(\text{2}\right)} \text{(} {\text{x}}_{̲} \text{,} {\text{x}}_{̲} \text{'))}$ where 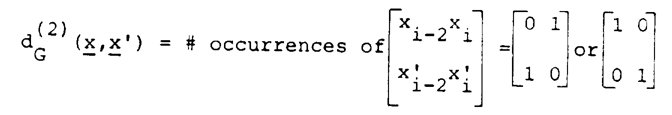 and

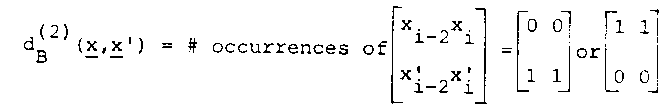

Finally, the contribution from Equation (A4) is$\text{2(d} {\text{}}_{\text{G}}^{\left(\text{3}\right)} \text{(} {\text{x}}_{̲} \text{,} {\text{x}}_{̲} \text{')-d} {\text{}}_{\text{B}}^{\left(\text{3}\right)} \text{(} {\text{x}}_{̲} \text{,} {\text{x}}_{̲} \text{'))}$ where 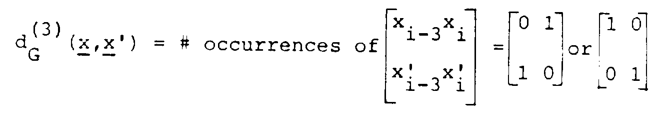 and

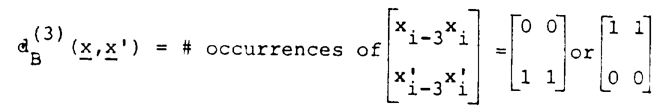

Therefore, the total d$\frac{\text{2}}{\text{E}}$ can be expressed as${\text{d}}_{\text{free}}^{\text{2}} \text{(} {\text{y}}_{̲} \text{,} {\text{y}}_{̲} {\text{')=4d}}_{\text{H}} \text{(} {\text{x}}_{̲} \text{,} {\text{x}}_{̲} \text{')+4(d} {\text{}}_{\text{G}}^{\left(\text{2}\right)} \text{(} {\text{x}}_{̲} \text{,} {\text{x}}_{̲} \text{')-d} {\text{}}_{\text{B}}^{\left(\text{2}\right)} \text{(} {\text{x}}_{̲} \text{,} {\text{x}}_{̲} \text{'))+2(d} {\text{}}_{\text{G}}^{\left(\text{3}\right)} \text{(} {\text{x}}_{̲} \text{,} {\text{x}}_{̲} \text{')-} \text{d} {\text{}}_{\text{B}}^{\left(\text{3}\right)} \text{(} {\text{x}}_{̲} \text{,} {\text{x}}_{̲} \text{'))-2(d} {\text{}}_{\text{G}}^{\left(\text{1}\right)} \text{(} {\text{x}}_{̲} \text{,} {\text{x}}_{̲} \text{')-d} {\text{}}_{\text{B}}^{\left(\text{1}\right)} \text{(} {\text{x}}_{̲} \text{,} {\text{x}}_{̲} \text{'))}$

Equation (A13) suggests that an inner code which combines bit repetition and inversion in even and odd substrings might generate large Euclidean distance, both by increasing the dH term and by contributing via the d$\frac{\text{(2)}}{\text{G}}$ d term.

V. Derivative of Bound for d$\frac{\text{2}}{\text{free}}$ of Interleaved Biphase Code with EPR4 Channel

Examine the rate 1/2 inner code which has been denoted IB, defined by $\text{x₁x₂ → x₁x₂} \overline{\text{x}} \text{₁} \overline{\text{x}} \text{₂}$

Let x and x' denote inputs to the IB encoder, and let u and u' denote the corresponding outputs. Use subscripts "e" and "o" to denote even and odd substrings respectively. To prove the bound stated in Equation (4) of the specification, consider two cases.
Case 1:$\text{(d} {\text{}}_{\text{G}}^{\left(\text{1}\right)} \text{-d} {\text{}}_{\text{B}}^{\left(\text{1}\right)} \text{)=(d} {\text{}}_{\text{G}}^{\left(\text{3}\right)} \text{)=0}$ If x≠x', then either d_{H}(uₑ,u$\frac{\text{'}}{\text{e}}$)≠0 or d_{H}(uₒ,u$\frac{\text{'}}{\text{o}}$)≠0. Without loss of generality, assume d_{H}(uₑ,u$\frac{\text{'}}{\text{e}}$)≠0. Then, since IB acts like the biphase code on xₑ and x$\frac{\text{'}}{\text{e}}$ , the argument in Section I hereof shows that$\text{d} {\text{}}_{\text{G}}^{\left(\text{2}\right)} \text{(} {\text{u}}_{̲} \text{,} {\text{u}}_{̲} \text{')-d} {\text{}}_{\text{B}}^{\left(\text{2}\right)} \text{(} {\text{u}}_{̲} \text{,} {\text{u}}_{̲} \text{')≥1}$ so${\text{d}}_{\text{free}}^{\text{2}} \text{(} {\text{y}}_{̲} \text{,} {\text{y}}_{̲} {\text{')≥4d}}_{\text{H}} \text{(} {\text{u}}_{̲} \text{,} {\text{u}}_{̲} {\text{')+4=8d}}_{\text{H}} \text{(} {\text{x}}_{̲} \text{,} {\text{x}}_{̲} \text{')+4}$ If both d_{H} (uₑ,u$\frac{\text{'}}{\text{e}}$) and d_{H}(uₒ,u$\frac{\text{'}}{\text{o}}$) are non-zero, then$\text{d} {\text{}}_{\text{G}}^{\left(\text{2}\right)} \text{(} {\text{u}}_{̲} \text{,} {\text{u}}_{̲} \text{')-d} {\text{}}_{\text{B}}^{\left(\text{2}\right)} \text{(} {\text{u}}_{̲} \text{,} {\text{u}}_{̲} \text{')≥2}$ implying${\text{d}}_{\text{free}}^{\text{2}} \text{(} {\text{y}}_{̲} \text{,} {\text{y}}_{̲} {\text{')≥8d}}_{\text{H}} \text{(} {\text{x}}_{̲} {\text{}}_{\text{e}} \text{,} {\text{x}}_{̲} {\text{}}_{\text{e}}^{\text{'}} {\text{)+4+8d}}_{\text{H}} \text{(} {\text{x}}_{̲} {\text{}}_{\text{o}} \text{,} {\text{x}}_{̲} {\text{}}_{\text{o}}^{\text{'}} {\text{)+4=8d}}_{\text{H}} \text{(} {\text{x}}_{̲} \text{,} {\text{x}}_{̲} \text{')+8}$
Case 2:$\text{(d} {\text{}}_{\text{G}}^{\left(\text{1}\right)} \text{-d} {\text{}}_{\text{B}}^{\left(\text{1}\right)} \text{) ≠ 0 or (d} {\text{}}_{\text{G}}^{\left(\text{3}\right)} \text{-d} {\text{}}_{\text{B}}^{\left(\text{3}\right)} \text{) ≠ 0}$ The assumption forces d_{H}(uₑ,u$\frac{\text{'}}{\text{e}}$) and d_{H}(uₒ,u$\frac{\text{'}}{\text{o}}$) to be non-zero, so use the remark at the end of case 1 to get$\text{d} {\text{}}_{\text{G}}^{\left(\text{2}\right)} \text{(} {\text{u}}_{̲} \text{,} {\text{u}}_{̲} \text{')-d} {\text{}}_{\text{B}}^{\left(\text{2}\right)} \text{(} {\text{u}}_{̲} \text{,} {\text{u}}_{̲} \text{')≥2}$ Since the combined contributions of d⁽¹⁾ and d⁽³⁾ can be at worst -4 for each position which contributes to d_{H}(x,x'), it can be concluded${\text{d}}_{\text{free}}^{\text{2}} \text{(} {\text{y}}_{̲} \text{,} {\text{y}}_{̲} {\text{')≥4d}}_{\text{H}} \text{(} {\text{x}}_{̲} \text{,} {\text{x}}_{̲} \text{')+8}$ It follows that if x is generated by a rate k / n binary convolutional code with free Hamming distance d$\frac{\text{H}}{\text{free}}$, then inner code IB will produce a rate k/2n trellis code with free Euclidean distance d$\frac{\text{2}}{\text{free}}$ bounded by:${\text{d}}_{\text{free}}^{\text{2}} {\text{≥min{8d}}_{\text{free}}^{\text{H}} {\text{+4, 4d}}_{\text{free}}^{\text{H}} \text{+8)}$ which agrees with Equation (4) in the specification.

## Claims

1. A method for coding input bit strings to improve reliability of partial response channels handling the same, comprising:
encoding an input string into an intermediate string using a binary convolution code;
characterised in that the method comprises encoding the intermediate string using a non-linear inner code that repeats and inverts selected bits of the intermediate string; the inner code having a coding rate of less than one.

2. A method as claimed in claim 1, wherein the convolutional code and inner code when concatenated produce a combined code rate, the magnitude of which is the product of the convolutional code rate and inner code rate; and modifying the convolutional code rate and/or inner code rate, for improving coding gain.

3. A method as claimed in either preceding claim, wherein both the inner code and the channels are interleaved.

4. A method as claimed in any preceding claim, wherein coding gain is at least 4.8 dB and maximum zero run length (ZRL) does not exceed 3.

5. A method as claimed in any preceding claim, wherein the inner code rate is greater than or equal to one-half and less than unity.

6. A method as claimed in any preceding claim, wherein the channel transfer polynomial is (1$\frac{\text{-}}{\text{+}}$ D^{N}).

7. A method as claimed in claim 6, wherein N is 2.

8. A method as claimed in any of claims 1 to 5, including concatenating an inner code of rate 1/2 on a (1±D) channel with rate 1 convolutional code to provide a combined code with rate 1/2 and maximum ZRL of 1.

9. A method as claimed in any of claims 1 to 5, including concatenating an inner code of rate 2/3 on a (1±D) channel with rate 3/4 convolutional code to provide a combined code with rate 3/6 and maximum ZRL of 2.

10. A method as claimed in any of claims 1 to 5, including concatenating an inner code of rate 3/4 on a (1±D) channel with rate 2/3 convolutional code to provide a combined code with rate 2/4 and maximum ZRL of 3.

11. A method as claimed in any of claims 1 to 5, including ccncatenating an inner code of rate 5/8 on a (1±D) channel with rate 4/5 convolutional code to provide a combined code with rate 4/8 and maximum ZRL of 3.

12. A method as claimed in any of claims 1 to 5, wherein the inner code is interleaved and the channel transfer polynomial is (1+D-D-D³).

13. A method as claimed in any of claims 1 to 5, including concatenating an inner code of rate 1/2 on a (1-D)(1+D) channel with optimal rate 1 code to provide an interleaved biphase rate 2/4 code with a coding gain of at least 4.8 dB.

## Patentansprüche

1. Ein Verfahren zur Codierung von Eingangsbitketten, um die Zuverlässigkeit von Partial-Response-Kanälen, welche das gleiche behandeln, zu verbessern, wobei das Verfahren
das Codieren einer Eingangskette in eine Zwischenkette mittels eines binären Konvolutionsmodus enthält;
dadurch gekennzeichnet wird, daß das Verfahren das Codieren der Zwischenkette mittels eines nicht linearen Innencodes enthält, der ausgewählte Bits aus der Zwischenkette wiederholt und invertiert; wobei der Innencode eine Codiergeschwindigkeit von kleiner eins hat.

2. Ein Verfahren wie in Anspruch 1 angemeldet, wobei der konvolutionelle Code und der Innencode, wenn diese verkettet werden, eine kombinierte Codegeschwindigkeit erzeugen, deren Größe das Produkt der konvolutionellen Codegeschwindigkeit und der Innencodegeschwindigkeit ist; und Änderung der konvolutionellen Codegeschwindigkeit und/oder Innencodegeschwindigkeit zur Verbesserung des Codierungsgewinns.

3. Ein Verfahren wie in jedem vorhergehenden Anspruch angemeldet, wobei sowohl der Innencode als auch die Kanäle verschachtelt werden.

4. Ein Verfahren wie in irgendeinem vorhergehenden Anspruch angemeldet, wobei der Codierungsgewinn wenigstens 4.8 dE ist und die maximale Null-Lauflänge (ZRL) 3 nicht überschreitet.

5. Ein Verfahren wie in irgendeinem vorhergehenden Anspruch angemeldet, wobei die Geschwindigkeit größer oder gleich ein Halbes und kleiner als ein Ganzes ist.

6. Ein Verfahren wie in irgendeinem vorhergehenden Anspruch angemeldet, wobei das Kanalübertragungspolynom (1 ∓ D^{N}) ist.

7. Ein Verfahren wie in Anspruch 6 angemeldet, wobei N 2 ist.

8. Ein Verfahren wie in irgendeinem der Ansprüche 1 bis 5 angemeldet, das die Verkettung eines Innencodes mit der Geschwindigkeit von 1/2 in einem (1±D) Kanal mit der Geschwindigkeit von 1 des konvolutionellen Codes enthält, um einen kombinierten Code mit einer Geschwindigkeit von 1/2 und maximaler ZRL von 1 bereitzustellen.

9. Ein Verfahren wie in irgendeinem der Ansprüche 1 bis 5 angemeldet, das die Verkettung eines Innencodes mit der Geschwindigkeit von 2/3 in einem (1±D) Kanal mit der Geschwindigkeit von 3/4 des konvolutionellen Codes enthält, um einen kombinierten Code mit einer Geschwindigkeit von 3/6 und maximaler ZRL von 2 bereitzustellen.

10. Ein Verfahren wie in irgendeinem der Ansprüche 1 bis 5 angemeldet, das die Verkettung eines Innencodes mit der Geschwindigkeit von 3/4 in einem (1±D) Kanal mit der Geschwindigkeit von 2/3 des konvolutionellen Codes enthält, um einen kombinierten Code mit einer Geschwindigkeit von 2/4 und maximaler ZRL von 3 bereitzustellen.

11. Ein Verfahren wie in irgendeinem der Ansprüche 1 bis 5 angemeldet, das die Verkettung eines Innencodes mit der Geschwindigkeit von 5/8 In einem (1±D) Kanal mit der Geschwindigkeit von 4/5 des konvolutionellen Codes enthält, um einen kombinierten Code mit einer Geschwindigkeit von 4/8 und maximaler ZRL von 3 bereitzustellen.

12. Ein Verfahren wie in irgendeinem der Ansprüche 1 bis 5 angemeldet, wobei der Innencode verschachtelt wird und das Kanalübertragungspolynom (1+D-D-D³) ist.

13. Ein Verfahren wie in irgendeinem der Ansprüche 1 bis 5 angemeldet, das die Verkettung eines Innencodes mit der Geschwindigkeit von 1/2 in einem (1-D) (1+D) Kanal mit optimaler Geschwindigkeit von 1 des Codes enthält, um eine verschachtelte Zweiphasengeschwindigkeit von 2/4 des Codes mit einem Codierungsgewinn von wenigstens 4.8 dB bereitzustellen.

## Revendications

1. Procédé pour coder des suites de bits d'entrée pour optimiser la fiabilité de canaux à réponse partielle chargés de traiter celles-ci, comprenant les étapes consistant à :
coder une suite d'entrée en une suite intermédiaire en utilisant un code à convolution binaire ;
caractérisé en ce que ledit procédé comprend aussi l'étape consistant à coder la suite intermédiaire en utilisant un code interne non linéaire qui répète et inverse des bits sélectionnés de la suite intermédiaire, ledit code interne ayant un débit de codage inférieur à un.

2. Procédé selon la revendication 1, dans lequel le code à convolution et le code interne, lorsqu'ils sont concaténés, produisent un débit de code combiné dont la grandeur correspond au produit du débit du code à convolution et du débit du code interne, ledit procédé comprenant l'étape consistant à modifier le débit du code à convolution et/ou le débit du code interne afin d'optimiser la gain de codage.

3. Procédé selon l'une quelconque des revendications précédentes, où le code interne et les canaux sont imbriqués.

4. Procédé selon l'une quelconque des revendications précédentes, où le gain de codage est d'au moins 4,8 dB et où la longueur de zéros (ZRL) maximum ne dépasse pas 3.

5. Procédé selon l'une quelconque des revendications précédentes, où le débit du code intérieur est supérieur ou égal au débit moitié et inférieur au débit unité.

6. Procédé selon l'une quelconque des revendications précédentes, où le polynôme de transfert de canal est (1±D^{N}).

7. Procédé selon la revendication 6, où N est égal à 2.

8. Procédé selon l'une quelconque des revendications 1 à 5, comprenant l'étape consistant à concaténer un code interne de débit 1/2 sur un canal (1±D) avec un code à convolution de débit 1 pour produire un code combiné avec un débit 1/2 et une ZRL maximum de 1.

9. Procédé selon l'une quelconque des revendications 1 à 5, comprenant l'étape consistant à concaténer un code interne de débit 2/3 sur un canal (1±D) avec un code à convolution de débit 3/4 pour produire un code combiné avec un débit 3/6 et une ZRL maximum de 2.

10. Procédé selon l'une quelconque des revendications 1 à 5, comprenant l'étape consistant à concaténer un code interne de débit 3/4 sur un canal (1±D) avec un code à convolution de débit 2/3 pour produire un code combiné avec un débit 2/4 et une ZRL maximum de 3.

11. Procédé selon l'une quelconque des revendications 1 à 5, comprenant l'étape consistant à concaténer un code interne de débit 5/8 sur un canal (1±D) avec un code à convolution de débit 4/5 pour produire un code combiné avec un débit 4/8 et une ZRL maximum de 1.3.

12. Procédé selon l'une quelconque des revendications 1 à 5, où le code interne est imbriqué et le polynôme de transfert de canal est (1+D-D-D³).

13. Procédé selon l'une quelconque des revendications 1 à 5, comprenant l'étape consistant à concaténer un code interne de débit 1/2 sur un canal (1-D)(1+D) avec un code de débit optimal 1 pour produire une modulation de phase à deux états imbriquée de débit 2/4 avec un gain de codage d'au moins 4,8 dB.
